# DEMANDE DE BREVET EUROPEEN

(11) **EP 0 940 075 A1**
(43) Date de publication de la demande: **08.09.1999**
(21) Numéro de dépôt: 99400371.3
(22) Date de dépôt: 17.02.1999
(51) Int. Cl.: A01K 1/06

(54) **Perfectionnements aux cornadis automatiques**

(30) Priorité: 06.03.1998 FR 9802748
(71) Demandeur: Etablissements Jourdain Société Anonyme, 45300 Pithiviers (FR)
(72) Inventeur: Simonneau, Francis Albert, 45140 St-Jean de la Ruelle (FR)
(74) Mandataire: Vander-Heym, Serge

(57) **Abrégé**

Cornadis du genre de ceux dont le bras pivotant se termine par une fourche (5) entre les ailes de laquelle est guidé un arbre coulissant (7) susceptible de venir prendre appui derrière un cran pour s'opposer au pivotement dudit bras, caractérisé en ce que le cran (9) est porté par un organe (8) fixé sur le longeron supérieur (3), des moyens (11) étant prévus sur une tringle (10), à coulissement axial, pour provoquer le soulèvement dudit arbre coulissant (7), les organes (8) étant conformés pour former les paliers de guidage de ladite tringle.

## Description

La présente invention est relative à des perfectionnements aux cornadis automatiques et, plus particulièrement mais non exclusivement, aux cornadis de sécurité.

Dans sa forme la plus simple, un cornadis est constitué par une barrière formant une succession d'ouvertures délimitées, chacune, par un montant vertical, par le longeron supérieur, par celui inférieur et par un bras pivotant.

Le bras pivotant peut être verrouillé, pour empêcher l'accès à l'auge ou pour maintenir l'animal et permettre son alimentation ou son examen.

En l'état actuel de la technique, la partie supérieure du bras pivotant présente une fourche entre les ailes de laquelle passent le longeron supérieur et une tringle pivotante de verrouillage disposée au-dessus dudit longeron et présentant, selon une génératrice, des crans derrière chacun desquels peut prendre appui un arbre coulissant porté par la fourche précitée. Par la rotation de la tringle, on escamote tous les crans et on libère les bras pivotants.

D'une façon générale, on constate qu'un cornadis comporte un certain nombre d'organes, assemblés ou coopérant les uns avec les autres, susceptibles de remplir les fonctions suivantes en vue d'assurer le blocage des bras pivotants, par l'entremise de l'arbre coulissant, ou leur déblocage :
- verrouillage (crans);
- support de l'organe de verrouillage (tringle);
- déverrouillage (rotation de la tringle);
- maintien de la tringle (paliers).

Comme la tringle a une longueur au moins égale à celle de la barrière de cornadis, il est nécessaire de prévoir plusieurs paliers soudés sur le longeron supérieur et des moyens permettant le passage de la tringle alors que celle-ci n'est pas lisse.

La tringle et la barrière sont deux organes, qui sont fabriqués séparément, dont les constituants doivent être assemblés avec des cotes précises puisqu'ils sont amenés à coopérer ensemble. L'expérience a montré que cette précision était très difficile à obtenir en raison des techniques de fabrication utilisées (tronçonnage, soudage et assemblage par boulons) et de la nécessité d'un traitement de protection contre la corrosion (galvanisation). Il en résulte qu'il arrive parfois que sur certaines barrières des bras pivotants ne peuvent pas être verrouillés.

A cela s'ajoute le fait que la tringle est, généralement, à une cote élevée par rapport au longeron supérieur ce qui rend le dispositif très fragile et bruyant.

La présente invention, qui remédie à ces inconvénients, est relative à un cornadis automatique du genre de ceux dont le bras pivotant se termine par une fourche entre les ailes de laquelle est guidé un arbre coulissant susceptible de venir prendre appui derrière un cran pour s'opposer au pivotement dudit bras, et elle est remarquable en ce que le cran est porté par un organe fixé sur le longeron supérieur, des moyens étant prévus sur une tringle, à coulissement axial, pour provoquer le soulèvement dudit arbre coulissant.

L'invention sera mieux comprise par la description qui va suivre faite en se référant aux dessins annexés à titre d'exemple indicatif, seulement, sur lesquels :
- la figure 1 montre un cornadis automatique de sécurité usuel;
- la figure 2 est une vue, à plus grande échelle du détail A de la figure 1 montrant le dispositif de l'invention, le bras pivotant étant représenté dans la position verrouillée;
- la figure 3 est une vue en coupe effectuée selon la ligne III-III de la figure 2;
- la figure 4 est une vue effectuée selon la ligne IV-IV de la figure 2;
- la figure 5 est une vue, analogue à la figure 2, montrant le début du déverrouillage;
- la figure 6 est une vue, analogue à la figure 2, les organes mobiles étant en position déverrouillée;
- la figure 7 est une vue, analogue à la figure 2, montrant les organes mobiles en position dite de sécurité.

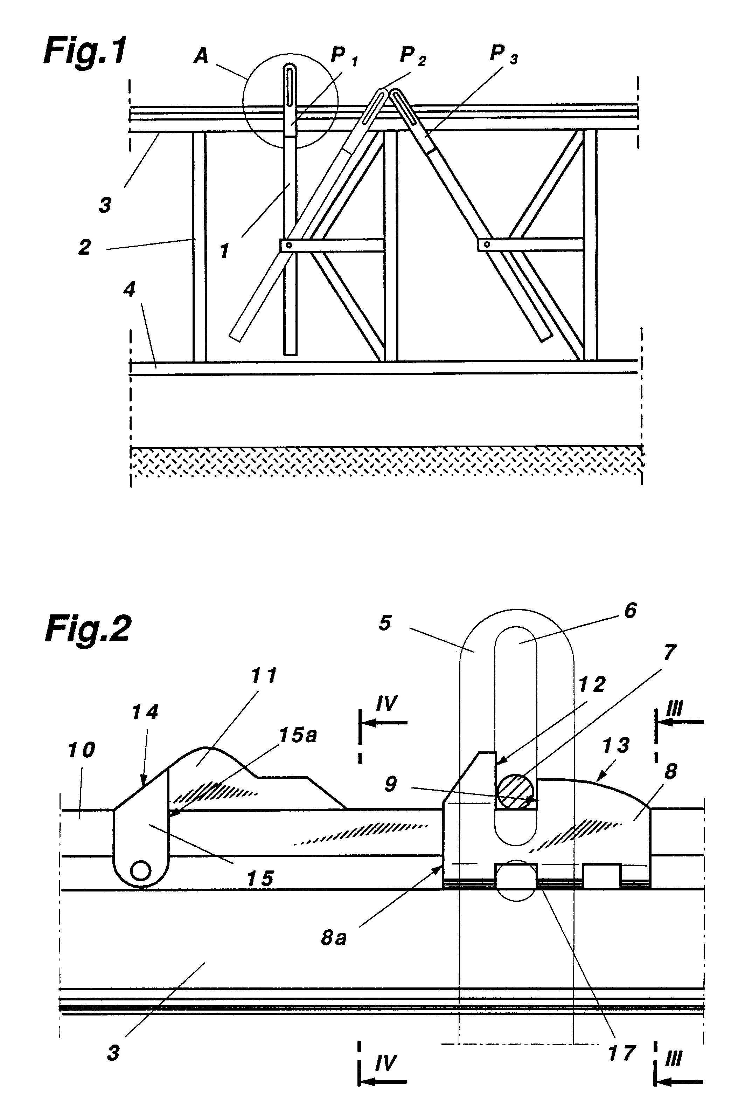

En se reportant à la figure 1, on voit que, sur un cornadis de sécurité connu, le bras pivotant 1 peut occuper trois positions.

Dans la position P₁, le bras délimite avec le montant 2 et les deux longerons 3 et 4, une ouverture, sensiblement, rectangulaire et étroite, c'est la position «animal entravé». Dans cette position, le bras ne doit pas pouvoir pivoter dans un sens ou dans l'autre. La position P₂ ménage une ouverture triangulaire dite «ouverture en haut» et la position P₃ ménage une ouverture, également triangulaire, dite «ouverture en bas», c'est la position de sécurité.

De la façon connue, la partie supérieure du bras 1 est pourvue d'une fourche 5 dont les ailes, qui s'étendent de part et d'autre du longeron 3, présentent une lumière 6 de guidage de l'extrémité correspondante d'un arbre coulissant 7.

Selon l'invention, l'organe de verrouillage 8 de l'arbre coulissant 7 est porté par le longeron supérieur 3 et présente, au moins, un cran 9 contre lequel ledit arbre prend appui.

L'organe 8 affecte la forme générale d'un U qui est soudé, par sa partie médiane, contre le longeron 3. De ce fait, le cran 9 est double. Cette disposition est avantageusement utilisée pour provoquer le déverrouillage du bras.

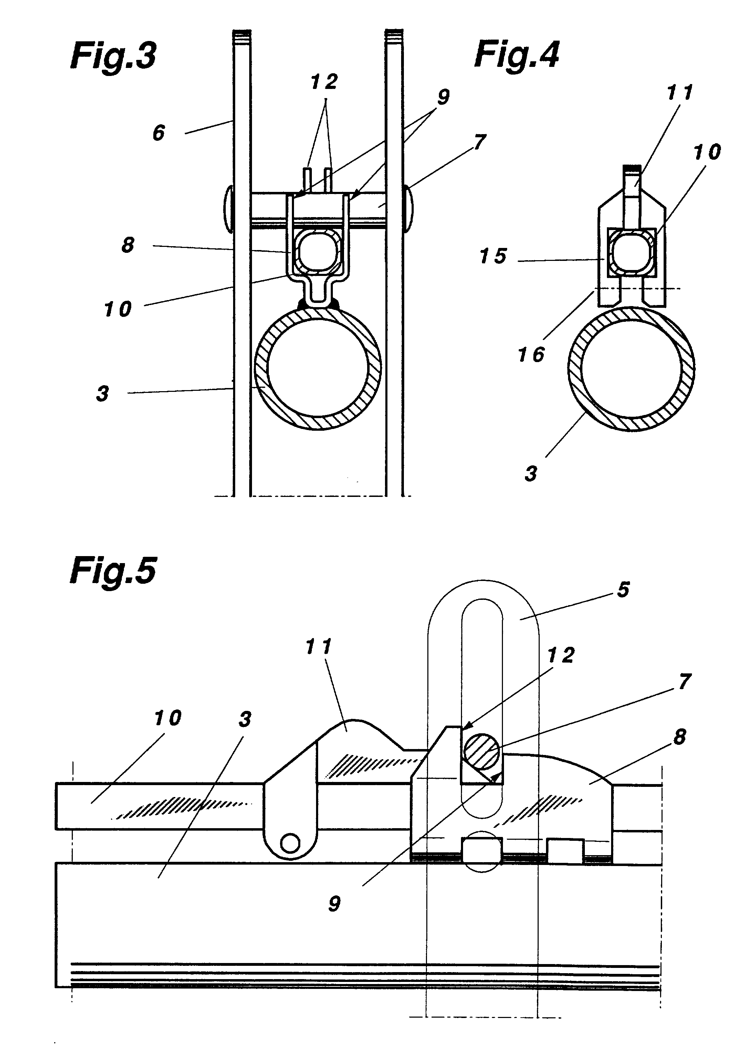

Selon l'invention, le déverrouillage est assuré par la coopération d'une tringle 10, pouvant coulisser axialement, et d'organes de déverrouillage 11 positionnés et immobilisés sur ladite tringle. Chaque organe de déverrouillage, disposé à la partie supérieure de la tringle, présente la forme d'un coin et peut s'insérer sous l'arbre coulissant, par un déplacement axial de ladite tringle, et le soulever par un effet de rampe (fig.5).

Chaque organe 8 forme un palier de guidage de la tringle coulissante.

Comme cela ressort des dessins, chaque cran 9 est associé à un cran 12 qui s'oppose au pivotement du bras vers la position P₃.

Comme le verrouillage se fait suite au passage de la position P₂ à celle P₁, une rampe 13 est ménagée en avant du cran 9.

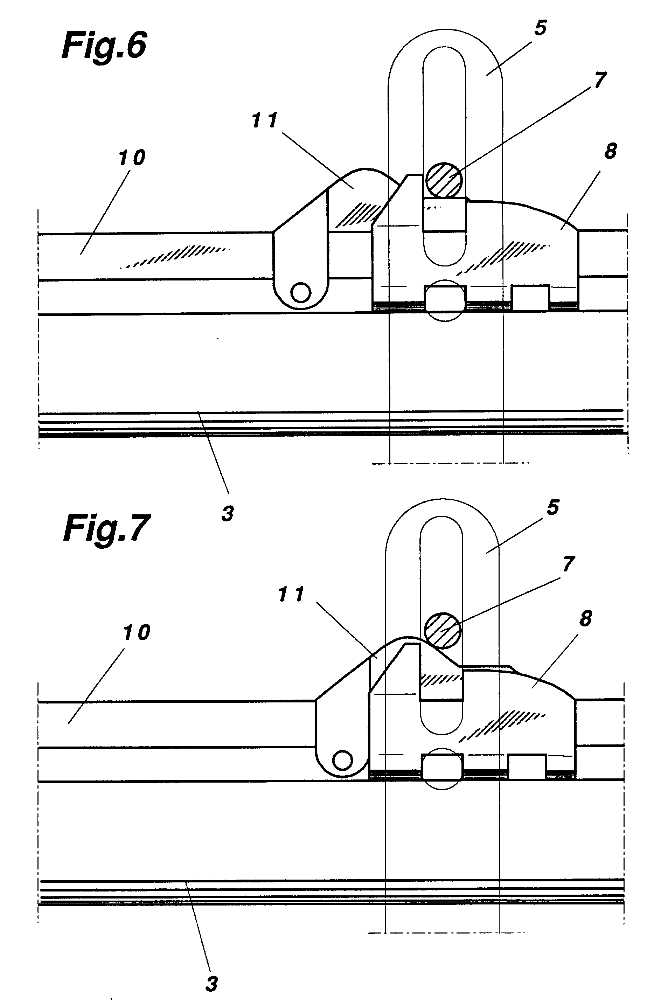

La hauteur du cran 12 est supérieure à celle du cran 9. De cette façon, et comme cela ressort de la figure 6, il est possible de déverrouiller partiellement le bras en interdisant toutefois le basculement vers la position P₃.

Dans la position représentée à la figure 7, l'organe de déverrouillage a repoussé l'arbre 7 vers le haut en lui permettant d'échapper à l'action du cran 12, le bras est totalement libre. Il est à noter que la partie de l'organe 11, qui s'étend de son sommet vers l'arrière, forme une rampe 14 favorisant le passage de la position P₃ aux autres positions.

L'organe 11 présente des moyens permettant sa fixation sur la tringle 10.

Selon l'invention, l'organe 11 présente deux pattes latérales 15 enserrant la tringle 10 et permettant le blocage à l'aide d'un boulon dont l'axe est schématisé en 16 sur la figure 4.

Les deux pattes 15 forment un épaulement 15a qui peut prendre appui contre l'extrémité 8a de l'organe 8 et il est à noter que les dimensions des organes 8 et 11 sont telles que dans cette position, qui est celle montrée sur la figure 7, l'arbre est positionné au-dessus de l'encoche formée par les crans 9 et 12 alors que le bras est dans la position P₁.

De ce fait, même si lors de la fabrication tous les organes 8 d'une barrière ne sont pas rigoureusement équidistants, cette anomalie n'affectera pas le fonctionnement des cornadis. En effet, lors de l'assemblage, il suffit d'appliquer l'organe 11 contre celui 8 et de le bloquer puis de faire de même pour chaque cornadis (Fig.7).

Les moyens utilisés pour déplacer axialement la tringle 10 pour l'amener et la maintenir dans l'une quelconque des positions des figures 2, 6 et 7 sont à la portée de l'homme de l'art et n'ont pas été représentés.

De la façon usuelle un moyen est prévu pour maintenir un bras en position verrouillée P₁ et, à cet effet, l'organe 8 présente une ouverture 17 de passage d'une broche de verrouillage traversant également la fourche 5.

Il est à noter, que les efforts résultant des poussées des animaux sur les bras 1 sont encaissés par le longeron supérieur, c'est-à-dire par la structure de la barrière, la tringle 10 n'encaissant aucun effort.

Etant donné que la tringle ne comporte pas d'organe devant s'escamoter par une rotation, comme c'est le cas sur les cornadis connus, la tringle 10 peut être située très près du longeron 3.

## Revendications

1. Cornadis du genre de ceux dont le bras pivotant (1) se termine par une fourche (5) entre les ailes de laquelle est guidé un arbre coulissant (7), susceptible de s'insérer dans l'encoche formée par un cran (9-12) porté par un organe (8) fixé sur le longeron supérieur (3), dont le soulèvement est déterminé par le déplacement, selon l'axe dudit longeron, d'un organe de déverrouillage (11) affectant la forme d'un coin, caractérisé en ce que l'organe (11) peut coulisser et être immoblisé sur une tringle (10), mobile axialement.

2. Cornadis selon la revendication 1, caractérisé en ce que l'organe (11) présente deux pattes latérales (15) enserrant la tringle (10) et permettant son blocage sur cette dernière à l'aide d'un boulon.

3. Cornadis selon l'une quelconque des revendications 1 et 2, caractérisé en ce que l'organe de déverrouillage (11) présente, au moins, un épaulement (15a) susceptible de venir prendre appui contre l'extrémité de l'organe (8), les dimensions des deux dits organes étant telles que dans cette position et lorsque le bras est dans la position correspondant au maintien de l'animal, l'arbre (7) est situé au dessus de l'encoche formée par les crans (9 et 12).
